# EUROPEAN PATENT APPLICATION

(11) **EP 1 790 237 A1**
(43) Date of publication of application: **30.05.2007**
(21) Application number: 05292313.3
(22) Date of filing: 02.11.2005
(51) Int. Cl.: A23L 1/30, A23L 1/0522, A23L 1/164, A23L 1/00, A23G 3/36, A23G 3/00

(54) **Food emulsion for use in bars, fillings, coatings and spreads and process of preparation**

(71) Applicant: COMPAGNIE GERVAIS DANONE, 92300 Levallois Perret (FR)
(72) Inventor: Fuhrmeister, Heiko, 13125 Berlin (DE); Berendsen, Wouter, 83104 Ostermünchen (DE); Nikitin, Sergej, Podolsk Kuznechiki 4-22 (RU); Muller, Horst, 83052 Bruckmühl (DE)
(74) Representative: Texier, Christian

(57) **Abstract**

The present invention concerns a non dairy food composition based on an oil-in-water emulsion containing sugar and carbohydrates characterized in that its water activity is of between 0.6 to 0.75 and its dry matter content is of between 80 to 95 % by weight based on the total weight of the food composition, in that it contains non-gelatinized starch whose particles size is below 10 µm, in that the composition is free from fat separation and in that the composition is stable at a temperature of between 1 and 15°C for at least 6 weeks. It also concerns its process of preparation.

## Description

The present invention concerns non dairy food composition based on oil-in-water emulsion which is not liquid and has a plastic behaviour and its use as filling in food product such as snack bars.

Consumers are more and more looking for healthy foods which are easy to eat and handle and in particular for healthy snack bars with contains low amount of fat and sugar. However, up to now, few bars exists having these characteristics. Furthermore more and more people have allergies problems with milk product, in particular lactose, and there is a need for food products having a creamy mouth feel and fresh note without the use of dairy product The present inventors have surprisingly found that the use of non gelatinized starch can provide a non dairy food composition based on an oil-in-water emulsion free from fat separation, having a sufficient texture to be handled by hand and to retain its original shape but still being spoonable and soft, having a low fat and sugar content and having a creamy mouthfeel.

The present invention concerns a non dairy food composition based on an oil-in-water emulsion containing sugar and carbohydrates characterized in that its water activity is of between 0.6 to 0.75, more advantageously of between 0.6 to 0.7 and its dry matter content is of between 80 to 95 % by weight based on the total weight of the food composition, more advantageously of between 85 to 90 % by weight based on the total weight of the food composition, in that it contains non gelatinized starch whose particles size is below 10 µm, in that the composition is free from fat separation and in that the composition is stable at a temperature of between 1 and 15°C for at least 6 weeks.

According to the present invention, the term "free from fat separation" is intended to mean that there is no separation of phase in the emulsion, and in particular no apparition of a visible fat phase.
According to the present invention the term "stable" is intended to mean that the non dairy food composition according to the present invention has not changed as regards the structure, the absence of fat separation and the contamination.

The water activity of a product is a notion which is well-known in the food sector, this measurement, often abbreviated to the form of (Aw), measures the availability of water in a sample. In most cases, this water activity is not proportional to the water content of the product.
By way of example, there may be mentioned:
- chocolate: about 1% water: (Aw) =0.50
- butter: 16% water: (Aw) =0.99
- fruit yoghurt: 82% water: (Aw) =0.99
- 10% glycerol in water: (Aw) =0.95
The methods permitting the measurement of the Aw of a product are known to persons skilled in the art.

The non-gelatinized starch which can be used in the food product according to the present invention can be any type of starch provided that it is not gelatinized and has a particles size below 10 µm, advantageously between 2 and 8 µm. This particle size avoids the sensation of the presence of particles in the mouth. Therefore, the particles are not discernable in the mouth. This particle size can be obtained directly from a starch which has naturally this particles size such as rice starch, or can be obtained after grinding the starch to obtain a particles size of below 10 µm.
Suitable starch sources are, for example, grain flours such as corn, rice, wheat, beets, barley, soy and oats. Also mixtures of these flours may be used. The flours may be whole flours or may be flours which have had fractions removed; for example the germ fraction or husk fraction may be removed. Rice flour, corn flour and wheat flour are particularly suitable, either alone or in combination.
Advantageously the starch used is gluten free and can be consumed by people allergic to gluten. More advantageously rice starch is used.

Advantageously, the amount of non gelatinized starch in the food composition according to the present invention is of between 10 to 40 % by weight based on the total weight of the non dairy food composition, more advantageously of between 15 to 25 % by weight based on the total weight of the non dairy food composition.
During the process of preparation of the food composition according to the present invention, the starch takes almost all the water available in the food composition but does not gelatinize.

Because of the presence of starch, the non dairy food composition according to the present invention can have a low fat content. Advantageously, its fat content is of between 15 to 35 % by weight based on the total weight of the food composition, more advantageously of between 15 to 30 % by weight based on the total weight of the food composition.
Any type of edible fat can be used in the present invention. Suitable fats are in particular edible oils or fats, in particular vegetable oils or fats, for example hydrogenated soy fat. Therefore the fat can be hydrogenated or partly hydrogenated vegetable oils or fat, in particular non lauric fat. For example vegetable oils such as sunflower oil, safflower oil, corn oil, and the like can be used. If oils are used, oils which are high in mono-unsaturates are particularly preferred. In particular the fat has a melting point higher than 20 °C. Examples of such fats are palm oil, palm kernel oil, coconut oil, cocoa butter, peanut butter or other vegetable butters, butter, margarine, hydrogenated or partially hydrogenated vegetable oils and/or vegetable oils, alone or mixed, whereby palm oil is preferred.
In a particular embodiment of the present invention, the non dairy food product according to the present invention has a low sugar content, advantageously of between 10 to 25 % by weight based on the total weight of the food composition.
The sugar that can be used in the present invention is mono, di or oligosaccharide or a mixture of these. In particular it can be chosen between maltodextrine, fructose, saccharose, dextrose, maltose, glucose, for example in the form of glucose syrup or of spray-dried glucose sold by Cerestar, lactose, sucrose, rice syrup, oligofructose, alternatively polyols such as sorbitol or a mixture of those. It is preferable to employ oligosaccharide as a part of the sugar. This oligosaccharide is composed of 3 to 10 monosaccharides such as glucose, fructose and the like to be connected. In accordance with the type(s) or the number of monosaccharides as constituents thereof, effects such as prevention of tooth decay as well as a function of a sweetening agent can be given. As such oligosaccharide, first as oligosaccharide having an effect of preventing tooth decay, there are, for example, galacto-oligosaccharide and fructo-oligosaccharide. Among them, it is preferable to employ fructo-oligosaccharide. Besides, the above oligosaccharide may be employed solely respectively or in combination of two or more. The use of sugars whose composition does not excessively increase the sweetening power of the medium will be preferred so as to retain a fresh product note in the composition according to the present invention.

In another embodiment of the present invention, the non dairy food composition according to the present invention contains fibers, advantageously soluble fibers such as inulin or fructo-oligosaccharides, in particular in an amount of between 10 to 20 % by weight based on the total weight of the food composition.

In another advantageous embodiment of the present invention, the food composition according to the present invention presents an overrun of between 0 to 45 %, advantageously of between 20 to 40%, more advantageously of around 30%. This overrun imparts a better aspect to the composition by whitening it. Such overrun can be obtained by the addition of gas, in particular air or inert gas. Furthermore the overrun can provide a smoother feeling characteristic to the composition according to the present invention.

Advantageously, in order to impart a fresh tone to the non dairy food composition according to the present invention, the composition is acidified to a pH of between 3 and 5, advantageously of between 3.5 and 4.5, more advantageously by the use of citric acid, lactic acid, malic acid, phosphoric acid or the like. Advantageously, citric acid is used. This acidification also lessens the possibility of unwanted microbial growth and therefore increases the shelf life of the product.

The non dairy food composition according to the present invention can contain an emulsifying agent, in particular Diacetyl Tartaric Acid Esters of Monoglycerides (DATEM) or citric acid esters of mono- and diglycerides or soybean lecithin, advantageously in an amount of 1 to 3 % by weight based on the total weight of the food composition.

The non dairy food composition according to the present invention can also contain proteins, such as for example milk proteins, advantageously in a quantity of between 0 to 3% by weight based on the total weight of the food composition, advantageously of between 1 to 2% by weight based on the total weight of the food composition. In particular milk proteins can be added in the form of skim milk powder, advantageously in a quantity of less than 5% by weight. (This amount of skimmed milk will bring only negligible amount of lactose) Other type of protein can be used, such as soy proteins or other vegetable proteins.

Advantageously, the carbohydrates content of the non dairy food composition according to the present invention is of between 30 to 50% by weight, based on the total weight of the food composition.

Other additives can be added to the non dairy food composition according to the present invention such as flavoring agent, in particular yogurt flavor, cocoa flavor or vanilla flavor, trace element and minerals, calcium, iron, magnesium, phosphore, vitamins, in particular vitamin, C, D and E, antioxidants, coloring agent, preservatives, stabilizers and the like.

The present invention also concerns the use of the non dairy food composition according to present invention as filling or coating for a food product, advantageously a snack bar, more advantageously as filling or coating for a dried ready to eat cereal product, for example in form of a sandwich or as a fully cereal-coated non dairy food composition, or as a spread.
In particular, the filling or coating content of such food product is of between 10 to 90 % by weight based on the total weight of the food product.

The present invention also concerns a multilayer food product which contains at least one layer of the non dairy food composition according to the present invention. In particular, the multilayer food product according to the present invention can have the following layers, from bottom to top:
- a cereal layer and a layer of the non dairy food composition according to the present invention;
- a cereal layer or chocolate layer, a layer of the non dairy food composition according to the present invention and a cereal layer or chocolate layer;
- a chocolate layer, a cereal layer, a layer of the non dairy food composition according to the present invention, a cereal layer and a chocolate layer;
- a cereal layer, a chocolate layer, a layer of the non dairy food composition according to the present invention, a chocolate layer and a cereal layer.

The present invention also concerns a solid food composition comprising as filling the non dairy food composition according to the present invention coated by a coating layer which contains cereals and/or fruits and/or seeds and/or nut products.
The coating layer can cover the entire filling or only part of it. Advantageously, the filling represents 30% to 50% by weight of the solid food product according to the present invention, more advantageously, 40% by weight.

According to the present invention the term "fruit" is intended to mean any dried or fruit or solid fruit preparation which has an Aw of not more than 0.75. Examples of such fruits include but are not limited to cherry, grape, strawberry, raspberry, fig, apple, apricot, alone or as a mixture of several of them,
This term does not comprise any fresh fruit.
According to the present invention, examples of seed include but are not limited to, sesame seeds, pumpkin seeds and poppy seeds

According to the present invention, the term "nut products" is intended to mean any nuts such as walnuts, almonds, nut kernel, cashew nuts, macadamia nuts etc..
Examples of cereals which can be used in the present invention are corn, oat or rice flakes. Wheat bran, corn bran, rice bran, rye bran and the like can be used as part of the cereal layer according to the present invention. In this case, the coating layer contains fibers, advantageously in an amount of not more than 15% by weight based on the total weight of the coating layer.
Advantageously, the coating layer is a cereal layer which optionally comprises fruits and/or nut products and/or seeds.
More advantageously, the cereal layer is a solid ready-to-eat layer which comprises particles of cereals, and optionally fruits and/or seeds and/or nut products, bonded by a syrup containing sugar and carbohydrates. In particular this layer is crunchy and imparts crunchiness to the solid food composition according to the present invention. Advantageously the amount of cereals and optionally fruits and/or seeds and/or nut products is of between 60 to 70% by weight based on the total weight of the cereal layer.
Advantageously, the cereal layer is coated by another layer, such as another cereal layer or a chocolate layer.
In an advantageous manner, the fat content of the cereal layer is of between 0 to 8 % by weight based on the total weight of the cereal layer.
In a particular embodiment of the present invention, the Aw of the cereal layer is of between 0.5 to 0.75.
Surprisingly, even if the Aw of the filling is higher than the Aw of the coating layer, the solid food composition is crunchy and remains crunchy during the shelf life of the solid food composition at a storage temperature of 4-10 °C.
In another particular embodiment of the present invention the water content of the cereal layer is of between 5 to 15 % by weight based on the total weight of the cereal layer.
Advantageously, the sugar content of the cereal layer according to the present invention is of between 20 to 40 % by weight based on the total weight of the cereal layer.

In an advantageous manner the protein content of the cereal layer according to the present invention is of between 5 to 15 % by weight based on the total weight of the cereal layer.
More advantageously, the carbohydrate content of the cereal layer according to the present invention is of between 60 to 85 % by weight based on the total weight of the cereal layer.
Other additives can be added to the cereal layer according to the present invention such as flavoring agent, in particular yogurt flavor, cocoa flavor, orange flavor, strawberry flavor, lemon flavor, coffee flavor or vanilla flavor, emulsifying agent such as soybean lecithin, trace element and minerals, calcium, iron, magnesium, phosphore, vitamins, in particular vitamin, C, D and E, antioxidants, coloring agent, preservatives, stabilizers and the like.

In a more particular embodiment of the present invention the solid food composition according to the present invention contains probiotics.
A probiotic is a component containing live microorganisms that is added to an edible product, the component having a beneficial effect on the microbial balance in the host's intestines and hence on the host's well-being and health in general. For instance, several lactic acid bacteria are found to have this kind of health improving probiotic effect on both human beings and animals, which effect is based on the ability of the microbe to enhance the welfare of the intestinal flora by equilibrating the microbial population, whereby the quantities of harmful, e.g. carcinogenic compounds, and pathogenic microbes decrease. Lactic acid bacteria are also found to reduce allergic symptoms and to alleviate lactose intolerance. Among the health effects of probiotics, a cholesterol lowering effect, a preventing and curing effect on diarrhea, a stimulating effect on immune response and even a reduction in cancer risk can also be mentioned. The probiotic effect may result both from a compound produced by a microbe and from the ability of an intestinal microbe to equilibrate the growth of other microbes.
According to the definition, a prebiotic is a non-digestible ingredient of nourishment, which selectively stimulates the growth and/or activity of one or some beneficial intestinal bacteria, and which hence has a beneficial effect on the host's health. According to current knowledge, certain oligo- and poly-saccharides, and possibly peptides, which are not hydrolyzed nor absorbed in the gastrointestinal tract, may act as prebiotics. One important group of prebiotics is fructo-oligosaccharides; other compounds having prebiotic effect include e.g. transglycosylated disaccharides, lactulose, palatinose-oligosaccharides and soybean oligosaccharides. Besides, according to the present invention, in case of the presence of probiotics in the coating cereal layer of the solid food composition according to the present invention, the sugar of this coating cereal layer may also contain oligosaccharides, in particular fructo-oligosaccharides. The mixing ratio of the oligosaccharide is not critical, however, it is preferable to set within the range 1 to 8 % based on the total composition. Besides, the above oligosaccharide may be employed solely respectively or in combination of two or more.
According to the present invention, the probiotic may be any microorganism having a probiotic effect, such as e.g. a lactic acid bacterium, a bifidobacterium or a streptococcus and includes yeast such as *Saccharomyces, Debaromyces, Candida, Pichia* and *Torulopsis,* moulds such as *Aspergillus, Rhizopus, Mucor,* and *Penicillium* and bacteria such as the genera *Bifidobacterium, Bacteroides, Clostridium, Fusobacterium, Melissococcus, Propionibacterium, Streptococcus, Enterococcus, Lactococcus, Staphylococcus, Peptostrepococcus, Bacillus, Pediococcus, Micrococcus, Leuconostoc, Weissella, Aerococcus, Oenococcus and Lactobacillus.* Specific examples of suitable probiotic micro-organisms are: *Saccharomyces cereviseae, Bacillus coagulans, Bacillus licheniformis, Bacillus subtilis, Bifidobacterium animalis, Bifidobacterium bifidum, Bifidobacterium infantis, Bifidobacterium longum, Enterococcus faecium, Enterococcus faecalis, Lactobacillus acidophilus, Lactobacillus alimentarius, Lactobacillus bulgaricus, Laciobacillus casei subsp. casei, Lactobacillus casei Shirota, Lactobacillus curvatus, Lactobacillus delbruckii subsp. lactis, Lactobacillus farciminus, Lactobacillus gasseri, Lactobacillus helveticus, Lactobacillus johnsonii, Lactobacillus plantarum, Lactobacillus reuterii, Lactobacillus rhamnosus (Lactobacillus GG), Lactobacillus sake, Lactococcus lactis, Micrococcus varians, Pediococcus acidilactici, Pediococcus pentosaceus, Pediococcus acidilactici, Pediococcus halophilus, Streptococcus faecalis, , Streptococcus rhamnosus, Streptococcus thermophilus, Staphylococcus carnosus, and Staphylococcus xylosus.*
Advantageously the probiotics are bacteria.
Organisms which belong to genera *Streptococcus, Lactobacillus and Bifidobacterium* are considered advantageous.
The composition may contain the probiotic both as a pure culture, which consists of only one strain, and as a mixed culture, whereby it contains several different strains. Advantageously, the probiotics are of the Bifidus type, preferably *Bifidobacterium animalis,* more advantageously *Bifidobacterium animalis subsp lacti* (CNCM I-2494) (EP1297176).

Advantageously, the probiotics are of the Lactobacillus type, preferably *Lactobacillus plantarum.*
More advantageously, the probiotics are only present in the coating layer, more advantageously in the binder (sugar syrup) of the cereal coating layer.
Advantageously, the amount of probiotics in the solid food composition according to the present invention is of between 10⁶ to 10¹¹ cfu/g, advantageously of between 10⁸ to 10¹¹ cfu/g of the solid food composition. In particular the amount of probiotics in the cereal coating layer is of between 0.1 to 10% by weight based on the total weight of the cereal coating layer.
High probiotic content is an important characteristic of the solid food composition according to the present invention. A sufficient amount of probiotic is included in the composition in order that the desired probiotic effect is achieved. So the amount of probiotic in the composition may also vary within a wide range, for instance, depending on the strain used and the total daily intake.
Advantageously the probiotics present in the coating cereal layer remain alive at a temperature of between 4°C and room temperature for at least 4 weeks.
According to the present invention the term "probiotics remain alive" is intended to mean that the amount of probiotics does not decrease of more than 1000 cfu/g, advantageously of more than 100 cfu/g.

Of course, the solid food composition according to the present invention can be provided in many forms, the simplest form is that of a food bar in form of a sandwich in which the filling (i.e. the non dairy food composition according to the present invention) is placed between two layers of cereal coating according to the present invention, but it is obviously possible to provide for other embodiments for which non dairy food composition and the cereal layer are arranged differently. In a particular embodiment, the solid food composition according to the present invention is in form of a bar in which the coating layer covers the whole filling except for the ends or as a fully coated bar.
Advantageously, the present invention is a granola bar.

Furthermore, the present invention concerns a process for the preparation of the non dairy food composition according to the present invention which comprises the following steps:
a. preparation of a liquid fat-phase containing the starch and an emulsifier and optionally storage, for example for 24 hours;
b. preparation of a liquid water phase containing the carbohydrates, sugar, and optionally fibers, and optionally storage, for example for 24 hours;
c. mixing, advantageously continuously with a static mixer, of the two phases preferably at a temperature of between 15 to 50°C, advantageously at 35°C;
d. optionally whipping of the mixture at a temperature of between room temperature and 35°C, advantageously at a temperature of between 30 to 35°C;
e. recovery of the non dairy food composition.
In a particular embodiment the step (a) of preparation of the fat phase comprises the following successive steps:
a1. heating of the fat, advantageously at a temperature minimum 10°C higher than its melting point, more advantageously at a temperature of between 30 to 100 °C, still more advantageously at 70°C;
a2. addition of the emulsifier and mixing, advantageously at a temperature of between 30 to 100°C, more advantageously at a temperature of 65°C;
a3. addition of the starch, mixing and cooling to a temperature of between 15 to 50°C, advantageously at a temperature of 35°C.
In another particular embodiment the step (b) of preparation of the water phase comprises the following successive steps:
b1. optionally mixing of water with protein at a temperature of between 50 to 100°C, advantageously 60°C, and cooling to a temperature of between 25 to 60°C, advantageously to 45°C;
b2. addition of sugar and optionally fibers to water or to the water/protein mixture of step (b1) and mixing, advantageously at a temperature of between 25 to 60°C, more advantageously at a temperature of between 30 to 45°C;
b3. optionally acidification.
Advantageously, in step (c) the fat phase represents 40 to 60 % by weight of the mixture, advantageously 50% by weight.
For a few hours after step (c) the product obtained remains pompable and whippable. Therefore step (d) of whipping can be implemented, for example with a Mondomix apparatus. Optionally the process according to the present invention comprises a further step (f) of cooling of the non dairy food composition to room temperature.

The present invention also concerns a process of preparation of a solid food composition in form of a sandwich according to the present invention which comprises the following steps:
(A) formation of a bottom cereal coating layer according to the present invention, and optionally cutting of the bottom cereal coating layer;
(B) extrusion of the filling constituted by a non dairy food composition according to the present invention on top of the bottom cereal coating layer,
(C) addition of a top cereal coating layer according to the present invention on top of the filling in order to obtain a sandwich, and optionally cutting of the sandwich into pieces.

Therefore this process can comprise the following steps:
(A1) formation of a bottom cereal coating layer according to the present invention, and cutting of the bottom cereal coating layer into pieces;
(B1) extrusion of the filling constituted by a non dairy food composition according to the present invention on top of the bottom cereal coating layer,
(C1) addition of a top cereal coating layer according to the present invention on top of the filling in order to obtain a sandwich.
This process can also comprise the following steps:
(A2) formation of a bottom cereal coating layer according to the present invention;
(B2) extrusion of the filling constituted by a non dairy food composition according to the present invention on top of the bottom cereal coating layer,
(C2) addition of a top cereal coating layer according to the present invention on top of the filling in order to obtain a sandwich and cutting of the sandwich into pieces.

The present invention also concerns a process of preparation of a solid food composition according to the present invention in form of a bar in which the non-dairy filling is coated by the cereal layer, which comprises the following steps:
(α) molding or forming of the cereal coating layer according to the present invention in a U-shaped form,
(β) filling of the molded or formed cereal coating layer with the filling constituted by a non dairy food composition according to the present invention;
(γ) addition of a top cereal coating layer according to the present invention on top of the filling in order to obtain a bar in which the cereal coating layer covers the whole filling except for the ends.

The present invention also concerns a process of preparation of the cereal coating layer of the solid food product according to the present invention which comprises the following steps:
1) preparation of a syrup containing water, sugar, carbohydrates and optionally fat;
2) optionally, heating of the syrup to its boiling point to obtain a water content of between 15 to 25 % by weight based on the total weight of the syrup,
3) mixing of the syrup with the particles of cereals, and optionally dried fruit and/or nut products and/or seeds,
4) recovery of a solid, ready to eat, cereal coating layer.

In case the cereal coating layer contains probiotics, the probiotics are added in the freeze-dried form just before step (3) advantageously at a temperature of not more than 70°C or during step (3) advantageously at a temperature of not more than 70°C. Advantageously, the probiotics are added in an amount of between 10⁹ to 10¹¹ cfu/g of the cereal coating layer.

The present invention also concerns a syrup which contains sugar, carbohydrates and probiotics characterized in that
- the concentration of probiotics is of between 10⁶ to 10¹¹ cfu/g
- the fat content of the syrup is of between 0 to 8 % by weight based on the total weight of the syrup,
- the Aw of the syrup is of between 0.5 to 0.75 and
- the water content of the syrup is of between 10 to 20 % by weight based on the total weight of the syrup.
Advantageously, the sugar content of the syrup is of between 50 to 70 % by weight based on the total weight of syrup.
More advantageously, the protein content of the syrup is of between 0 to 1 % by weight based on the total weight of the syrup.
Advantageously, the carbohydrate content of the syrup is of between 65 to 85 % by weight based on the total weight of the syrup.

The following examples which are not limitative give formulae presenting the characteristics of the products according to the present invention.

### Example 1: preparation of a non dairy food product according to the present invention

The non dairy food composition has the composition indicated in table 1 bellow:

**Table 1**

| **Ingredients** | Mass **Fraction** | Dry **Matter** | **Fats** | **Proteins** | **CH*** | **Sugars** | **Lactose** | **Ca²⁺** | **Fibers** |
|---|---|---|---|---|---|---|---|---|---|
| | **% g/g** | **% g/g** | **% g/g** | **% g/g** | **% g/g** | **% g/g** | **% g/g** | **% g/g** | **% g/g** |
| Skim milk powder | 4,2 | 4,02 | 0,04 | 1,51 | 2,14 | 2,14 | 2,14 | 0,05 | 0 |
| Rice starch | 20,9 | 18,00 | 0,02 | 0,21 | 17,46 | 0 | 0 | 0 | 0 |
| Spray-dried glucose | 2,6 | 2,51 | 0 | 0 | 2,51 | 0,48 | 0 | 0 | 0 |
| Dextrose | 12,6 | 11,45 | 0 | 0 | 11,45 | 11,45 | 0 | 0 | 0 |
| Fructose | 3,1 | 3,12 | 0 | 0 | 3,11 | 3,09 | 0 | 0 | 0 |
| Oligo-saccharide | 12,6 | 12,06 | 0 | 0 | 0,60 | 0,60 | 0 | 0 | 11,69 |
| Citric Acid (50%-solution) | 0,7 | 0,33 | 0 | 0 | 0 | 0 | 0 | 0 | 0 |
| Emulsifier | 2,1 | 2,09 | 2,09 | 0 | 0 | 0 | 0 | 0 | 0 |
| Water | 9,0 | 0 | 0 | 0 | 0 | 0 | 0 | 0 | 0 |
| Powder sugar (Saccharose) | 5,9 | 5,86 | 0 | 0 | 5,86 | 5,86 | 0 | 0 | 0 |
| Vegetable oils | 26,2 | 26,16 | 25,90 | 0 | 0 | 0 | 0 | 0 | 0 |
| yogurt flavor | 0,2 | 0 | 0 | 0 | 0 | 0 | 0 | 0 | 0 |
| **Mass Fraction** | **100,00** | **85,61** | **28,06** | **1,72** | **43,13** | **23,62** | **2,14** | **0,05** | **11,69** |

| | | | | | | | | | |
|---|---|---|---|---|---|---|---|---|---|
| * CH = carbohydrate | | | | | | | | | |

The food composition is prepared as follow:
Preparation of the water phase:
   Water is heated to 60°C. Then skim milk powder is added and mixed with water. After the addition, the temperature of the mixture is 45°C. Spray-dried glucose is added and mixed until complete dissolution. After the addition, the temperature of the mixture is 30°C. Dextrose, fructose, saccharose and oligosaccharide are added and mixed until complete dissolution. The mixture is acidified with citric acid to a pH of 3.9. The yoghurt flavor is thus added. The water phase thus obtained is liquid and can be stored for up to 24 hours.
Preparation of the fat phase:
   Vegetable oils are heated to 70°C. The emulsifier is added and mixed with the oils at 65°C. Rice starch is added and mixed. After the addition, the temperature of the mixture is 35°C.
      The fat phase thus obtained is liquid and can be stored for up to 24 hours.

The water phase and the fat phase are mixed together with a static mixer at 35°C. The mixture thus obtained is no more liquid but is still pourable and pompable.
The mixture is then cooled to 30°C. The cooled mixture is whipped with a Mondomix apparatus to obtain a 30% overrun by incorporation of air.

### Example 2: preparation of a cereal coating layer according to the present invention without probiotics

The cereal layer is constituted of particles of cereals and dried fruits bonded by a sugar syrup which has been cooked. The composition of the syrup before cooking is indicated in table 2 below:

**Table 2**

| **Ingredients** | **%** | **DM** | **Fat** | **Protein** | **CH** | **Sugar** | **Mineral** | **Ca²⁺** |
|---|---|---|---|---|---|---|---|---|
| Maltose syrup | 37.87 | 30.18 | 0 | 0 | 30.30 | 27.05 | 0 | 0 |
| Fructose syrup | 20.00 | 16.80 | 0.08 | 0.22 | 16.00 | 13.36 | 0 | 0 |
| water | 15.00 | 0 | 0 | 0 | 0 | 0 | 0 | 0 |
| Dextrose | 8.00 | 7.98 | 0 | 0 | 7.98 | 7.98 | 0 | 0 |
| Vegetable oils | 6.00 | 5.40 | 5.40 | 0 | 0 | 0 | 0 | 0 |
| Maltodextrine | 8.20 | 7.54 | 0 | 0 | 7.54 | 0 | 0 | 0 |
| Soy lecithin | 0.12 | 0.08 | 0.08 | 0 | 0 | 0 | 0 | 0 |
| Caramelized sugar syrup | 0.05 | 0.04 | 0 | 0 | 0.04 | 0.04 | 0.05 | 0 |
| Alamin | 4.76 | 4.21 | 0.05 | 0.24 | 0.12 | 0.12 | 3.81 | 1.36 |
| *Syrup* | 100.0 | 72.24 | 5.61 | 0.46 | 61.98 | 48.55 | 3.86 | 1.36 |

The composition of the syrup after cooking is indicated in table 3 bellow:

**Table 3**

| | **%** | **DM** | **Fat** | **Protein** | **CH** | **Sugar** | **Mineral** | **Ca²⁺** |
|---|---|---|---|---|---|---|---|---|
| ***Syrup after cooking*** | 100.00 | 86.78 | 6.73 | 0.55 | 74.46 | 58.33 | 4.63 | 1.63 |

The composition of the particles of cereals and dried fruits is indicated in table 4 bellow:

**Table 4**

| **Ingredients** | **Amount** | **%** | **DM** | **Fat** | **Protein** | **CH** | **Sugar** | **Fibers** |
|---|---|---|---|---|---|---|---|---|
| Cherry | 166.68 | 16.67 | 15.17 | 0.23 | 0.03 | 14.70 | 14.70 | 0.32 |
| Cornflakes Type Müsli | 182.48 | 18.25 | 17.52 | 0.18 | 1.50 | 15.07 | 0 | 0.01 |
| Rice Crispies Type micro V3 | 470.65 | 47.07 | 45.19 | 0.61 | 9.04 | 34.97 | 0 | 0.06 |
| Oat flakes | 180.18 | 18.02 | 16.22 | 1.26 | 2.43 | 10.58 | 0 | 0.02 |
| *Cereals and fruits* | 1000.00 | 100.01 | 94.09 | 2.29 | 13.00 | 75.33 | 14.70 | 0.40 |

The cereal coating layer is prepared as follows:
Water, maltodextrine and dextrose are mixed together at a temperature of 100°C, until complete dissolution. Fructose and maltose, Soya lecithin, vegetable oils, caramelized sugar syrup and alamin are added, mixed and heated to a temperature of 110°C.
The mixture is then cooled to 95°C. 30% by weight of the mixture based on the total weight of the cereal layer is mixed with 70% by weight of the cereals and dried fruits based on the total weight of the cereal layer.
The ready-to-eat, solid cereal layer is thus obtained.

### Examples 3 to 6: preparation of a cereal coating layer according to the present invention containing Bifidobacterium animalis subsp lacti (CNCM I-2494) (EP1 297 176).

The *Bifidobacterium animalis* before the addition is in the form of a freeze-dried product having 6.10¹⁰ cfu/g.
The cereal layer has the same composition as in example 2 and is prepared according to the process of example 2 except that:
- the cereal coating layer contains bifidus which are added in the freeze-dried form;
- the point of addition of bifidus is in the cooked syrup just before the mixing with cereals and fruits (examples 3 to 5) or during the mixing of the cooked syrup and the cereal and fruits (example 6);
- before the addition of the bifidus, the mixture or the syrup is cooled to 70°C.
The quantity of bifidus added is as follows:
In example 3: 1 % by weight based on the total weight of the cooked syrup,
In example 4: 2.8 % by weight based on the total weight of the cooked syrup,
In example 5: 5 % by weight based on the total weight of the cooked syrup,
In example 6: 0.3 % by weight based on the total weight of the mixture containing cereals, dried fruits and the cooked syrup.

The results of the viability of the bifidus after 4 weeks of storage at a temperature of 4°C are indicated in table 5 below.

**Table 5**

| **Point of Bifidus Addition** | **Point of Analysis** | **week+0** | **week +1** | **week +2** | **week +3** | **week +4** |
|---|---|---|---|---|---|---|
| in syrup (example 3) | syrup | 4.50E+07 | 1.20E+08 | - | - | - |
| in syrup (example 3) | cereal coating | 1.30E+08 | 6.00E+07 | 3.40E+08 | 4.50E+08 | 5.20E+08 |
| during cereals mixing (example 6) | cereal coating | 5.30E+08 | 4.10E+08 | 5.30E+08 | 1.90E+08 | - |
| in syrup (example 4) | cereal coating | 1.30E+08 | 2.20E+08 | - | - | - |
| in syrup (example 4) | cereal coating | 2.30E+08 | 2.60E+08 | - | - | - |
| in syrup (example 4) | cereal coating | 7.80E+07 | - | - | - | - |
| in syrup (example 5) | cereal coating | 3.30E+08 | 3.50E+08 | - | - | - |
| in syrup (example 5) | cereal coating | 2.30E+08 | 2.80E+08 | - | - | - |
| in syrup (example 5) | cereal coating | 3.40E+08 | - | - | - | - |

All bifidus counts were corrected to represent cfu/g bar to enable comparison.
In general the inaccuracy of this method is half a log-scale.
Therefore, the bifidus remain alive in the cereal coating layer for at least 4 weeks.

### Examples 7-11: preparation of a granola bar according to the present invention with bifidus (examples 8 to 11) or without bifidus (example 7)

A granola bar is prepared which contains 40% by weight of the non dairy food product according to example 1 as filling and 60 % by weight of the cereal coating layer according to examples 2 (example 7), example 3 (example 8), example 4 (example 9), example 5 (example 10) and example 6 (example 11).

The granola bar (weight: 30g ; 2.7 cm in width, 1.5 cm in height, 8 to 9 cm in length) is in form of a sandwich in which the filling is placed between two layers of cereal coating layer. To do so, the filling can be extruded on the cereal coating layer.

The bars have characteristics indicated in tables 6 and 7 below.

**Table 6**

| | **Mass Fraction % g/g** | **Dry Matter % g/g** | **Fats % g/g** | **Proteins % g/g** | **CH % g/g** | **Sugars % g/g** | **Lactose % g/g** | **Ca²⁺ % g/g** | **Fibers % g/g** |
|---|---|---|---|---|---|---|---|---|---|
| Non dairy composition | 40.00 | 34.24 | 11.22 | 0.69 | 17.25 | 9.45 | 0.85 | 0.02 | 4.68 |
| Cereal coating layer | 60.00 | 55.18 | 2.15 | 5.62 | 45.05 | 16.46 | 0.03 | 0.29 | 0.17 |
| Final Product | 100.00 | 89.42 | 13.37 | 6.31 | 62.30 | 25.90 | 0.88 | 0.31 | 4.85 |

**Table 7**

| | | **Total** | **Fats** | **Proteins** | **CH** | **Sugars** |
|---|---|---|---|---|---|---|
| **Energy in 100g** | **kcal**/**100g** | 394.79 | 120.37 | 25.23 | 249.19 | 103.62 |
| Energy % | % of total kcal | 100.00 | 30.49 | 6.39 | 63.12 | 26.25 |
| Energy in one bar | **kcal / 25g** | 98.70 | 30.09 | 6.31 | 62.30 | 25.90 |

After 6 weeks of storage at a temperature of 4°C, all the bars according to examples 7-11 remain crunchy.

## Claims

1. Non dairy food composition based on an oil-in-water emulsion containing sugar and carbohydrates **characterized in that** its water activity is of between 0.6 to 0.75 and its dry matter content is of between 80 to 95 % by weight based on the total weight of the food composition, **in that** it contains non-gelatinized starch whose particles size is below 10 µm, **in that** the composition is free from fat separation and **in that** the composition is stable at a temperature of between 1 and 15°C for at least 6 weeks.

2. Non dairy food composition according to claim 1 **characterized in that** its non gelatinized starch content is of between 10 to 40 % by weight based on the total weight of the food composition.

3. Non dairy food composition according to any one of claims 1 or 2, **characterized in that** its fat content is of between 15 to 35 % by weight based on the total weight of the food composition.

4. Non dairy food composition according to any one of claims 1 to 3, **characterized in that** its sugar content is of between 10 to 25 % by weight based on the total weight of the food composition.

5. Non dairy food composition according to any one of claims 1 to 4, **characterized in that** it contains fibers, in particular in an amount of between 10 to 20 % by weight based on the total weight of the food composition.

6. Non dairy food composition according to any one of claims 1 to 5, **characterized in that** it presents an overrun of between 0 to 45 %.

7. Use of the non dairy food composition according to claims 1 to 6 as filling or coating for a food product, advantageously a snack bar, or as a spread.

8. Use according to claim 7, **characterized in that** the filling or coating content is of between 10 to 90 % by weight based on the total weight of the food product.

9. Multilayer food product **characterized in that** it contains at least one layer of the non dairy food composition according to any one of claims 1 to 6.

10. Solid food composition comprising as filling the non dairy food composition according to any one of claims 1 to 6 coated by a layer which contains cereals and/or fruits and/or seeds and/or nut products.

11. Solid food composition according to claim10, **characterized in that** it contains probiotics, in particular of the bifidus type.

12. Solid food composition according to claim 11, **characterized in that** the probiotics are only present in the coating layer.

13. Solid food composition according to any one of claims 10 to 12, **characterized in that** it is in form of a sandwich, of a bar in which the coating layer covers the whole filling except for the ends or as a fully coated bar.

14. Process for the preparation of the non dairy food composition according to any one of claims 1 to 6, **characterized in that** it comprises the following steps:
a. preparation of a liquid fat-phase containing the starch and an emulsifier and optionally storage;
b. preparation of a liquid water phase containing the carbohydrates, sugar, and optionally fibers, and optionally storage;
c. mixing of the two phases preferably at a temperature of between 15 to 50°C;
d. optionally whipping of the mixture at a temperature of between 25°C to 35°C;
e. recovery of the non dairy food composition.

15. Process of preparation of a solid food composition in form of a sandwich according to any one of claims 10 to 13, **characterized in that** it comprises the following steps:
(A)Formation of a bottom cereal coating layer, and optionally cutting of the bottom cereal coating layer;
(B) Extrusion of the filling according to any one of claims 1 to 6 on top of the bottom cereal coating layer;
(C) Addition of a top cereal coating layer on top of the filling in order to obtain a sandwich, and optionally cutting of the sandwich into pieces.

16. Process of preparation of a solid food composition in form of a bar in which the non-dairy filling is coated by the cereal layer according to any one of claims 10 to 13, **characterized in that** it comprises the following steps:
(α) molding or forming of the cereal coating layer in a U-shaped form;
(β) filling of the molded or formed cereal coating layer with the filling according to any one of claims 1 to 6;
(y) addition of a top cereal coating layer on top of the filling in order to obtain a bar in which the coating cereal layer covers the whole filling except for the ends.
